# EUROPÄISCHE PATENTANMELDUNG

(11) **EP 0 897 094 A1**
(43) Veröffentlichungstag der Anmeldung: **17.02.1999**
(21) Anmeldenummer: 98114857.0
(22) Anmeldetag: 07.08.1998
(51) Int. Cl.: F28D 20/00

(54) **Vorrichtung zur Speicherung und Abgabe von Wärme**

(30) Priorität: 13.08.1997 DE 19735007
(71) Anmelder: Winkelmann & Pannhoff GmbH & Co. Stahl-Behälter-Technik, 59227 Ahlen (DE)
(72) Erfinder: Brüntrup, Otto, 59227 Ahlen/Westfalen (DE)
(74) Vertreter: Patentanwälte Meinke, Dabringhaus und Partner

(57) **Zusammenfassung**

Es soll eine Vorrichtung zur Speicherung und Abgabe von Wärme an ein Heizungsnetz in Form eines Sorptionsspeichers geschaffen werden, die auf möglichst einfache Weise mit möglichst geringem Raumbedarf und zuverlässiger Behälterdichtigkeit herstellbar und montierbar ist und die Möglichkeit großer Speichervolumina bereitstellt.

Dies wird durch wenigstens einen druckdichten Behälter (1) erreicht, in welchem in einem ersten oberen Bereich (7) das Adsorbens (8) sowie ein erster Wärmeaustauscher (9) angeordnet sind, wobei unterhalb des ersten Bereiches (1) ein von diesem mittels einer gasdurchlässigen Trennwand (10) getrennter zweiter Bereich (11) vorgesehen ist, in welchem ein Verdampfer und ein Kondensator angeordnet sind, wobei unterhalb des zweiten Bereiches (11) ein druckdicht von diesem getrennter dritter Bereich (15) zur Aufnahme eines Wasservorrates (16) vorgesehen ist, wobei der dritte Bereich (15) über ein Ventil (17) mit dem zweiten Bereich (11) verbindbar ist, wobei das Ventil (17) magnetisch betätigbar ist und der Behälter (1) aus einem oberen (2) und einem unteren (3) Behälterteil besteht, deren Mantelschüsse durch eine Rundschweißnaht (4) oder dgl. verbunden sind, und wobei sämtliche Rohranschlüsse in den unteren Behälterteil (3) gasdicht eingeschweißt sind.

## Beschreibung

Die Erfindung betrifft eine Vorrichtung zur Speicherung und Abgabe von Wärme an ein Heizungsnetz in Form eines Sorptionsspeichers.

Aus der Firmenschrift "Sorptionsspeicher - Saisonale Wärmespeicherung mit hohen Energiedichten" der Firma UFE SOLAR GmbH, Alfred-Nobel-Straße 1, 16225 Eberswalde, Autoren Walter Mittelbach und Hans-Martin Henning, ist es bekannt, daß die Adsorption von Wasserdampf an Silikagel und anderen technischen Adsorbentien zur Wärmespeicherung verwendet werden kann. Dabei überschreiten die erreichten Energiedichten diejenigen eines Wasserspeichers je nach Desorptionsbedingungen um das vier- bis fünffache. Für Niedrigenergiehäuser ist somit eine solare Raumheizung mit hohen Deckungsanteilen mit Speichervolumina möglich, die in gewöhnlichen Kellerräumen untergebracht werden können. Die Wärmespeicherung beruht auf der Nutzung der Wärme, die bei der Ad- und Desorption von Wasserdampf an Silikagelen oder ähnlichen technischen Adsorbentien umgesetzt werden. Diese hochporösen Materialien haben die Eigenschaft, Wasserdampf stark anzuziehen und unter Wärmeabgabe an ihrer Oberfläche zu binden (Adsorption). Umgekehrt wird bei der Erwärmung des Adsorptionsmaterials der gebundene Wasserdampf wieder freigesetzt (Desorption). Silikagele sind glasartige amorphe Silikate, die großtechnisch hauptsächlich als Trocknungsmittel eingesetzt werden.

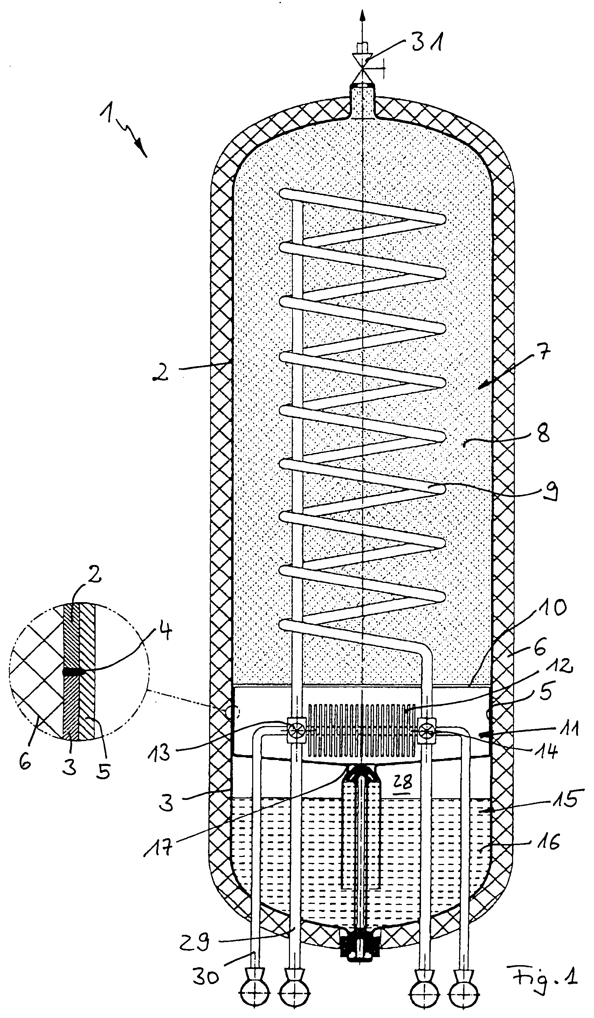

Zur saisonalen Wärmespeicherung kann, wie in der Abbildung 1 der vorgenannten Veröffentlichung dargestellt, während des Sommers das Silikagel unter Wärmezufuhr von einer Solaranlage desorbiert, d.h. getrocknet, werden. Der freiwerdende Wasserdampf wird dabei kondensiert und in flüssiger Form in einem separaten Behälter gespeichert. Ist das Sorptionsmaterial vollständig ausgeheizt, wird die Verbindung zwischen dem Behälter mit dem Sorptionsmaterial, also dem Adsorber, und dem Vorratsbehälter für Wasser geschlossen. Solange kein Wasserdampf in den Adsorber gelangt, wird der Speicher auch bei Raumtemperatur nicht entladen. Zur Entladung des Speichers während der Heizperiode wird das Ventil zwischen dem Adsorber und dem Vorratsbehälter geöffnet. Das Sorptionsmaterial zieht Wasserdampf so stark an, daß das gespeicherte Wasser bei niedrigen Temperaturen verdampft, in den Adsorber strömt und dort adsorbiert wird. Die dabei freiwerdende Adsorptionswärme wird für die Heizung genutzt. Wenn das System evakuiert ist, läuft dieser Prozeß ohne äußere Einwirkung ab, solange die zur Verdampfung notwendige Niedertemperaturwärme von den Sonnenkollektoren bereitgestellt wird.

Zur Durchführung dieses Verfahrens ist in der vorgenannten Druckschrift nur der prinzipielle Aufbau einer Vorrichtung angegeben, eine in der Praxis einsetzbare Vorrichtung ist dieser Druckschrift nicht zu entnehmen.

Aufgabe der Erfindung ist es, eine gattungsgemäße Vorrichtung zu schaffen, die auf möglichst einfache Weise mit möglichst geringem Raumbedarf und zuverlässiger Behälterdichtigkeit herstellbar und montierbar ist und die Möglichkeit großer Speichervolumina bereitstellt.

Diese Aufgabe wird mit einer Vorrichtung der eingangs bezeichneten Art erfindungsgemäß durch wenigstens einen druckdichten Behälter gelöst, in welchem in einem ersten oberen Bereich das Adsorbens sowie ein erster Wärmeaustauscher angeordnet sind, wobei unterhalb des ersten Bereiches ein von diesem mittels einer gasdurchlässigen Trennwand getrennter zweiter Bereich vorgesehen ist, in welchem ein Verdampfer und ein Kondensator angeordnet sind, wobei unterhalb des zweiten Bereiches ein druckdicht von diesem getrennter dritter Bereich zur Aufnahme eines Wasservorrates vorgesehen ist, wobei der dritte Bereich über ein Ventil mit dem zweiten Bereich verbindbar ist, wobei das Ventil magnetisch betätigbar ist und der Behälter aus einem oberen und einem unteren Behälterteil besteht, deren Mantelschüsse durch eine Rundschweißnaht oder dgl. verbunden sind, und wobei sämtliche Rohranschlüsse in den unteren Behälterteil gasdicht eingeschweißt sind.

Es wird somit eine Vorrichtung zur Verfügung gestellt, in welcher praktisch alle für die Wärmespeicherung notwendigen Komponenten innerhalb eines einzigen Behälters angeordnet sind. Eine solche Vorrichtung ist relativ einfach herzustellen und insbesondere einfach zu montieren, außerdem ist es insbesondere auch möglich, auf einfache Weise durch geeignete Verbindung mehrere Behälter parallel oder in Reihe miteinander modulartig zu kombinieren, um das jeweils erforderliche Speichervolumen für einen zu beheizenden Haushalt zur Verfügung zu stellen. Dabei ist es durch das Ventil zwischen dem dritten und dem zweiten Bereich möglich, die Druckverhältnisse, wie sie prozeßbedingt im Absorptionsraum und im Verdampfer-/Kondensationsraum benötigt werden, exakt einzustellen, ohne daß die Behälterwandung für Betätigungselemente durchbrochen werden muß. Durch die Trennung des Behälters in einen oberen und einen unteren Behälterteil ist es weiterhin möglich, in besonders vorteilhafter Weise in den unteren Behälterteil sämliche Rohranschlüsse gasdicht einzuschweißen. Auch hierdurch wird die Montage des Behälters wesentlich vereinfacht.

In vorteilhafter Ausgestaltung ist vorgesehen, daß das magnetisch betätigbare Ventil einen außerhalb des Behälters angeordneten Elektromagneten als Betätigungselement für einen Ventilstößel des Ventils aufweist, der sich bis in eine Ventilaufnahme im Bodenbereich des unteren Behälterteils erstreckt.

Besonders vorteilhaft ist vorgesehen, daß der Ventilsitz des Ventils mit einer Verlängerung ausgerüstet ist, die als Tauchrohr in den Wasservorrat hineinragt. Dadurch lassen sich auf einfache Weise unterschiedliche Drücke im zweiten und dritten Bereich aufrechterhalten.

Ganz besonders vorteilhaft sind die Mantelschüsse der Behälterteile unterschiedlich lang ausgebildet. Da üblicherweise für den Wasserraum ein erheblich kleineres Volumen als für den Adsorberraum erforderlich ist, bildet der kleinere Behälterteil dann das Wasserreservoir.

Bei dieser Konstruktion ist in weiterer Ausgestaltung besonders vorteilhaft vorgesehen, daß die Trennung zwischen dem zweiten und dem dritten Bereich von einem topfförmigen Trennelement gebildet ist, welches im Bereich der Verbindung der beiden Behälterteile mit den Mantelschüssen des Behälters verbunden ist.

Dieses topfförmige Element bietet vorteilhaft gleichzeitig eine Auflagefläche für das Gitterblech, welches nämlich bevorzugt auf dem oberen Rand des topfförmigen Elementes angeordnet ist.

Weiterhin ist vorteilhaft vorgesehen, daß in das topfförmige Trennelement der Ventilsitz für das Ventil eingeformt ist, an den sich dann das Tauchrohr anschließt.

Zur Vereinfachung der Herstellung ist vorteilhaft vorgesehen, daß die Behälterteile und/oder das topfförmige Element jeweils einstückig aus einem Blech hergestellt sind. Dies kann durch Kaltumformung geschehen, wobei alle Anschlüsse oder dgl. sogleich mitangeformt werden können.

Ferner ist besonders vorteilhaft vorgesehen, daß die Vorrichtung aus mehreren modulartig miteinander verbundenen Behältern besteht. Somit wird es auf einfache Weise ermöglicht, das jeweils erforderliche Speichervolumen bereitzustellen. Dabei ist eine hohe Flexibilität bei der Auslegung unterschiedlicher Speichervolumina gewährleistet. Die Behälter werden vorzugsweise vertikal stehend aufgebaut und der Anschluß der einzelnen Behälter an das System erfolgt über Verteilerleitungen, die in einem Rastersystem verlegt sind. Dabei kann die Verbindung zwischen den Anschlüssen der Behälter und der Verteilerleitung durch Steckkupplungen erfolgen, was eine weitere Optimierung bei der Montage der Behälter bietet. In Abhängigkeit von den jeweiligen Einbauverhältnissen können die Behälter auch horizontal angeordnet werden.

Um den erforderlichen Raumbedarf so gering wie möglich zu halten, ist besonders vorteilhaft vorgesehen, daß der Verdampfer und der Kondensator von einem zweiten Wärmeaustauscher gebildet sind, d.h. es ist nur ein einziges Bauteil zur Erfüllung der Verdampfer- und der Kondensatorfunktion notwendig, die ja prozeßbedingt nicht gleichzeitig benötigt werden. Der Wärmeaustauscher kann dazu über entsprechende Ventile entweder mit dem Heizkreislauf oder dem Solarkreislauf gekoppelt werden.

Die Erfindung ist nachstehend anhand der Zeichnungen beispielsweise näher erläutert. Diese zeigen in:
- Fig. 1: einen Längsschnitt durch eine erfindungsgemäße Vorrichtung mit einem Behälter,
- Fig. 2: den unteren Bereich des Behälters mit Ventil und in
- Fig. 3 bis 5: den zweiten Bereich des Behälters mit unterschiedlicher Schaltung der Anschlußleitungen des zweiten Wärmeaustauschers zur Erfüllung der Kondensator- bzw. Verdampferfunktion.

Eine erfindungsgemäße Vorrichtung zur Speicherung und Abgabe von Wärme an ein Heizungsnetz in Form eines Sorptionsspeichers weist wenigstens einen allgemein mit 1 bezeichneten druckdichten Behälter auf. Dieser zylinderförmige Behälter 1 besteht beim Ausführungsbeispiel aus einem oberen Behälterteil 2 und einem unteren Behälterteil 3, deren Mantelschüsse unterschiedlich lang sind, erkennbar ist das obere Behälterteil 2 deutlich größer bzw. länger als das untere Behälterteil 3. Beide Behälterteile, die beispielsweise jeweils aus einem Blech durch Kaltumformung hergestellt sein können, sind randseitig umlaufend miteinander, beispielsweise durch Verschweißen, verbunden, diese Schweißnaht ist mit 4 angedeutet. Im Verbindungsbereich des oberen Behälterteiles 2 und des unteren Behälterteiles 3 ist innenliegend ein topfförmiges Trennelement 5 eingebracht, dessen Außendurchmesser dem Innendurchmesser der Mantelschüsse der Behälterteile 2 und 3 entspricht und vorzugsweise mit derselben Schweißverbindung 4 an den Mantelschüssen befestigt ist. Die Funktion dieses topfförmigen Trennelementes wird nachfolgend noch näher beschrieben. Der Behälter 1 kann insgesamt außenseitig von einer Isolierung 6 umgeben sein.

Innerhalb des Behälters 1 ist zunächst ein erster oberer Bereich 7 vorgesehen, in welchem ein granulatförmiges Adsorbens, beispielsweise Silikagel, angeordnet ist, welches mit 8 bezeichnet ist. Außerdem ist innerhalb dieses ersten Bereiches 7 ein erster Wärmeaustauscher 9 angeordnet. Der erste Bereich 7 ist nach unten durch eine gasdurchlässige Trennwand begrenzt, die beim Ausführungsbeispiel von einem Gitterblech 10 gebildet ist, dessen Maschenweite kleiner als der kleinste Durchmesser des granulatförmigen Adsorbens ist.

Das Gitterblech 10 liegt dabei bevorzugt auf dem oberen Rand des topfförmigen Trennelementes 5 auf.

Unterhalb des ersten oberen Bereiches 7 ist, getrennt durch das Gitterblech 10, ein zweiter Bereich 11 innerhalb des Behälters 1 vorgesehen. In diesem zweiten Bereich 11 ist ein zweiter Wärmeaustauscher 12 angeordnet, der sowohl als Verdampfer als auch als Kondensator dienen kann, seine beiden Zuleitungen sind dabei jeweils mit Ventilen 13 bzw. 14 versehen, die verschiedene Anschlußmöglichkeiten bieten, worauf nachfolgend noch näher eingegangen wird.

Dieser zweite Bereich 11 ist unterseitig durch das topfförmige Trennelement 5 begrenzt, welches eine druckdichte Trennung von einem dritten unteren Bereich 15 innerhalb des Behälters 1 bildet. Dieser dritte Bereich 15 dient zur Aufnahme eines Wasservorrates 16.

Dabei ist im topfförmigen Trennelement 5 ein Ventil 17 aufgenommen, dessen nähere Ausgestaltung aus Figur 2 hervorgeht.

Der Ventilsitz 18 des Ventiles 17 ist vorzugsweise einstückig in das topfförmige Trennelement 5 integriert und bevorzugt mit einem als in den Wasservorrat 16 hineinragenden Tauchrohr 19 versehen, d.h. einstückig mit diesem ausgebildet.

Das Ventil 17 weist darüber hinaus einen im Ventilsitz 18 angeordneten Ventilkegel 20 auf, der auf einen Ventilstößel 21 aufgepreßt ist. Innerhalb des Ventilstößels 21 ist eine Ventilstange 22 angeordnet, die endseitig mit dem Ventilkegel 20 verbunden ist.

Im Bodenbereich des unteren Behälterteiles 3 ist eine Ventilaufnahme 23 vorzugsweise einstückig ausgebildet, welche außenseitig von einem Elektromagneten 24 umgeben ist. Innenseitig ist in der Ventilaufnahme 23 ein Weicheisenkern 25 angeordnet, der endseitig auf den Ventilstößel 21 aufgepreßt ist. Außerdem ist innenseitig in der Ventilaufnahme 23 ein Distanzbolzen 26 angeordnet, der zur Abstützung einer Druckfeder 27 dient, die endseitig die Ventilstange 22 beaufschlagt. Durch die Wirkung der Druckfeder 27 ist das Ventil 17 bzw. der Ventilkegel 20 geschlossen und kann positionsgenau durch Betätigung des Elektromagneten 24 geöffnet werden.

Die Funktionsweise der erfindungsgemäßen Vorrichtung ist folgendermaßen:

Zur Inbetriebnahme ist der Wasservorrat 16 im zweiten Bereich 15 nach außen hermetisch abgeriegelt, so daß keine Verluste auftreten können. Das Adsorbens 8 wird montagebedingt unter Vakuum im trockenen Zustand in den ersten Bereich 7 eingebracht, so daß ein maximales Wärmepotential zur Verfügung steht.

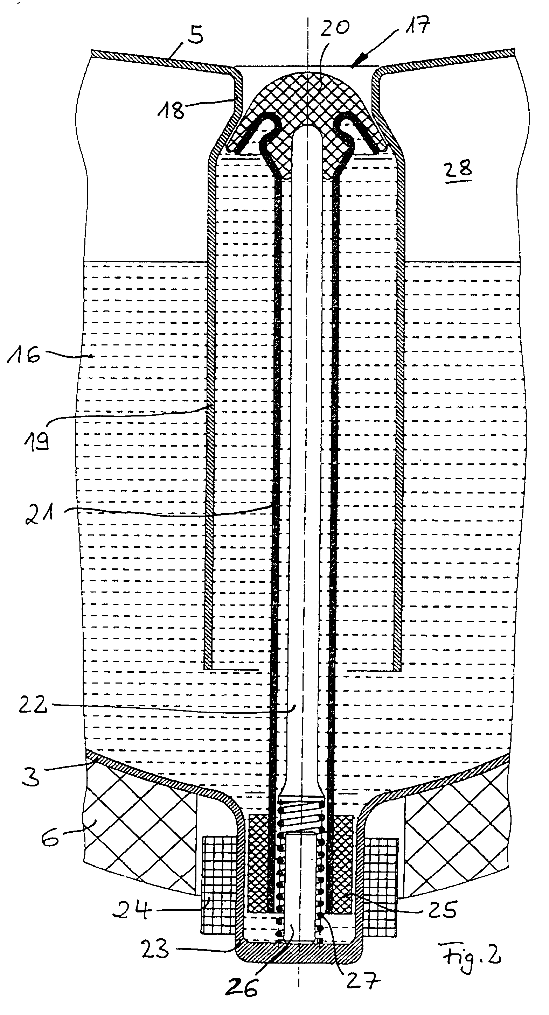

In den Bereichen 7 und 11 wird bei der Installation ein definierter Unterdruck, beispielsweise 5 mbar, eingestellt, gleichzeitig wird der Wasservorrat 16 bei der Montage mit einem bestimmten Überdruckpolster 28 von beispielsweise 10 mbar versehen. Der Behälter 1 ist über ein Ventil 31 an eine Vakuumquelle anschließbar, um den Unterdruck einzustellen oder während des Betriebes aufrechtzuerhalten. Das Ventil 17 ist dabei geschlossen. Gleichzeitig sind auch die Ventile 13 und 14 geschlossen, wie aus Figur 3 hervorgeht. Dies bedeutet, daß der zweite Wärmeaustauscher 12 in diesem Zustand weder an den mit 29 bezeichneten Verbrauchskreislauf (Heizungsanlage) noch an den mit 30 bezeichneten Wärmekreislauf, wie beispielsweise Solarkreislauf (Anschluß an wenigstens einen nicht dargestellten Solarkollektor) angeschlossen ist.

Die Inbetriebnahme beginnt anschließend zunächst mit einer Wärmeabfuhr an den Verbrauchskreislauf 29. Dazu werden die Überkreuzventile 13, 14 gemäß Figur 4 so in Überkreuzschaltung eingestellt, daß der erste Wärmeaustauscher 9 an den Verbrauchskreislauf 29 und der zweite Wärmeaustauscher 12 an den Solarkreislauf 30 angeschlossen ist. Das Ventil 17 wird dann geöffnet, wodurch durch das Überdruckpolster 28 der Wasservorrat 16 über das Tauchrohr 19 an den zweiten Wärmeaustauscher 12, der bei dieser Schaltung als Verdampfer dient, geflutet wird, wo das Wasser über die Beheizung durch den Solarkreislauf 30, ggf. unter Einsatz einer Zusatzheizung, vom Wärmeaustauscher 12 verdampft und vom Adsorbens 8 adsorbiert wird. Die dabei freigesetzte Wärme wird über den Wärmeaustauscher 9 dem Verbrauchskreislauf 29 zugeführt und entsprechend zur Beheizung genutzt.

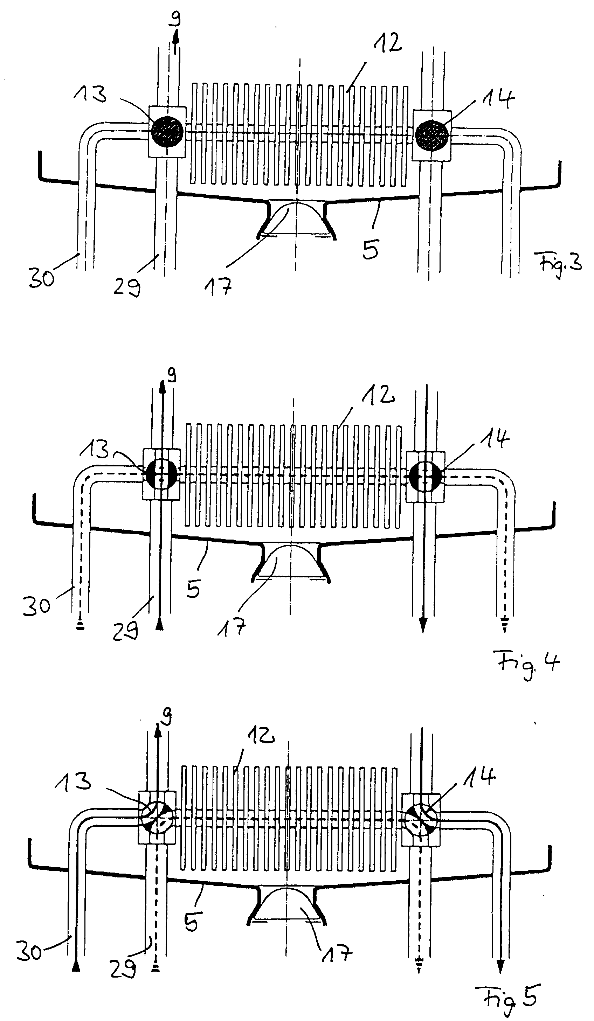

Zur Wärmespeicherung werden die Ventile 13 und 14 in die in Figur 5 dargestellte Position gebracht, d.h. der erste Wärmeaustauscher 9 ist in dieser Position an den Solarkreislauf 30 angeschlossen, während der zweite Wärmeaustauscher 12 an die Kaltwasserzufuhr des Verbrauchskreislaufes 29 angeschlossen ist und somit als Kondensator dient.

Das Ventil 17 ist geöffnet, so daß im Extremfall keine Druckdifferenz mehr zwischen dem Überdruckpolster 28 und den Bereichen 7 und 11 besteht. Durch die über den Solarkreislauf 30 zugeführte Wärme wird das Adsorbens 8 getrocknet, d.h. das darin gebundene Wasser verdampft und erzeugt somit einen Überdruck in den Bereichen 7 und 11 gegenüber dem Überdruckpolster 28. Der nichtaktive Verbrauchskreislauf 29 bewirkt mit seinem geringen Temperaturniveau im zweiten Wärmeaustauscher 12 eine Kondensation des Wasserdampfes im zweiten Bereich 11, das Wasser sammelt sich durch den herrschenden Überdruck wieder im Wasservorrat 16.

Zur Beendigung des Aufladevorganges werden das Ventil 17 und die Ventile 13 und 14 wieder geschlossen. Da nun keine Reaktion mehr stattfindet, sinkt in den Bereichen 7 und 11 die Temperatur langsam auf das Umgebungsniveau (z.B. Kellertemperatur) ab. Das bewirkt eine Druckabsenkung in diesem Bereich, so daß das Überdruckpolster 28 wieder seine Wirkung zeigen kann.

Die Betätigung der Ventile 13 und 14 kann entweder über eine Repetierschaltung vom Ventil 17 abgeleitet werden, oder durch am Behälteraußenmantel angebrachte Elektromagnete erfolgen. Weiterhin sind intelligente Ventile denkbar, die z.B. in Abhängigkeit der Wärmerichtung bzw. des Wärmegefälles automatisch die richtige Stellung einnehmen.

Natürlich ist die Erfindung nicht auf das dargestellte Ausführungsbeispiel beschränkt. Weitere Ausgestaltungen sind möglich, ohne den Grundgedanken zu verlassen. So ist es selbstverständlich auch möglich, innerhalb des zweiten Bereiches 11 nicht einen einzigen Wärmeaustauscher 12 vorzusehen, sondern einen getrennten Kondensator und Verdampfer. Außerdem können die Ventile 13 und 14 auch außerhalb des Behälters bzw. an der Behälteraußenseite vorgesehen werden und dgl. mehr. Darüber hinaus besteht eine erfindungsgemäße Vorrichtung bevorzugt nicht nur aus einem Behälter 1, sondern aus mehreren, die modulartig miteinander verbunden sind, um das für die jeweilige Heizungsanlage erforderliche Speichervolumen bereitzustellen.

## Patentansprüche

1. Vorrichtung zur Speicherung und Abgabe von Wärme an ein Heizungsnetz in Form eines Sorptionsspeichers,
gekennzeichnet durch
wenigstens einen druckdichten Behälter (1), in welchem in einem ersten oberen Bereich (7) das Adsorbens (8) sowie ein erster Wärmeaustauscher (9) angeordnet sind, wobei unterhalb des ersten Bereiches (7) ein von diesem mittels einer gasdurchlässigen Trennwand (10) getrennter zweiter Bereich (11) vorgesehen ist, in welchem ein Verdampfer und ein Kondensator angeordnet sind, wobei unterhalb des zweiten Bereiches (11) ein druckdicht von diesem getrennter dritter Bereich (15) zur Aufnahme eines Wasservorrates (16) vorgesehen ist, wobei der dritte Bereich (15) über ein Ventil (17) mit dem zweiten Bereich (11) verbindbar ist, wobei das Ventil (17) magnetisch betätigbar ist und der Behälter (1) aus einem oberen (2) und einem unteren (3) Behälterteil besteht, deren Mantelschüsse durch eine Rundschweißnaht (4) oder dgl. verbunden sind, und wobei sämtliche Rohranschlüsse in den unteren Behälterteil (3) gasdicht eingeschweißt sind.

2. Vorrichtung nach Anspruch 1,
dadurch gekennzeichnet,
daß das magnetisch betätigbare Ventil (17) einen außerhalb des Behälters (1) angeordneten Elektromagneten (24) als Betätigungselement für einen Ventilstößel (21) des Ventiles (17) aufweist, der sich bis in eine Ventilaufnahme (23) im Bodenbereich des unteren Behälterteiles (3) erstreckt.

3. Vorrichtung nach Anspruch 1 oder 2,
dadurch gekennzeichnet,
daß der Ventilsitz (18) des Ventiles (17) mit einer Verlängerung ausgerüstet ist, die als Tauchrohr (19) in den Wasservorrat (16) hineinragt.

4. Vorrichtung nach Anspruch 1, 2 oder 3,
dadurch gekennzeichnet,
daß die Mantelschüsse der Behälterteile (2,3) unterschiedlich lang sind.

5. Vorrichtung nach Anspruch 1 oder einem der folgenden,
dadurch gekennzeichnet,
daß die Trennung zwischen dem zweiten und dem dritten Bereich (11,15) von einem topfförmigen Trennelement (5) gebildet ist, welches im Bereich der Verbindung der beiden Behälterteile (2,3) mit den Mantelschüssen des Behälters (1) verbunden ist.

6. Vorrichtung nach Anspruch 5,
dadurch gekennzeichnet,
daß auf dem oberen Rand des topfförmigen Elementes (5) ein die Trennwand zwischen dem ersten und dem zweiten Bereich bildendes Gitterblech (10) angeordnet ist.

7. Vorrichtung nach Anspruch 6,
dadurch gekennzeichnet,
daß in das topfförmige Trennelement (5) der Ventilsitz (18) für das Ventil (17) eingeformt ist.

8. Vorrichtung nach Anspruch 1 oder einem der folgenden,
dadurch gekennzeichnet,
daß die Behälterteile (2,3) und/oder das topfförmige Element (5) jeweils einstückig aus einem Blech hergestellt sind.

9. Vorrichtung nach Anspruch 1 oder einem der folgenden,
dadurch gekennzeichnet,
daß diese aus mehreren modulartig miteinander verbundenen Behältern (1) besteht.

10. Vorrichtung nach Anspruch 8,
dadurch gekennzeichnet,
daß die Behälter (1) über Steckkupplungen mit Verteilerleitungen verbindbar sind.

11. Vorrichtung nach Anspruch 1 oder einem der folgenden,
dadurch gekennzeichnet,
daß der Verdampfer und der Kondensator von einem zweiten Wärmeaustauscher (12) gebildet sind.
